# EUROPÄISCHE PATENTSCHRIFT

(11) **EP 0 684 399 B1**
(45) Veröffentlichungstag und Bekanntmachung des Hinweises auf die Patenterteilung: **01.04.1998**
(21) Anmeldenummer: 95107244.6
(22) Anmeldetag: 12.05.1995
(51) Int. Cl.: F16D 25/0638

(54) **Trommelbauteil mit Verzahnung zur Aufnahme von Lamellenscheiben**
Splined drum-shape machine part for accomodating clutch plates
Elément de machine en forme de tambour denté pour l'accomodation de disques d'embrayage

(30) Priorität: 28.05.1994 DE 4418694
(43) Veröffentlichungstag der Anmeldung: 29.11.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Lauscher, Friedel, D-52372 Kreuzau-Drove (DE)
(74) Vertreter: Messulam, Alec Moses

(56) Entgegenhaltungen:
- FR-A- 2 292 894
- FR-A- 2 669 698
- US-A- 4 280 609
- US-A- 5 180 043

## Beschreibung

Die Erfindung bezieht sich auf ein Trommelbauteil mit Verzahnung zur Aufnahme von Lamellenscheiben, das als einstückiges, kaltverformtes Stahlblechbauteil ausgebildet ist.

Aus der FR-PS 2,292,894 ist ein Trommelbauteil mit Verzahnung zur Aufnahme von Lamellenscheiben bekannt, das als einstückiges, kaltverformtes Stahlblechbauteil ausgebildet ist und an zumindest einer Verzahnung, einer Innen- und/oder Außenverzahnung mit während der Herstellung ausgebildeten, längslaufenden Ausnehmungen mit V-förmigen Querschnitt an einem Teil der Verzahnung versehen ist, die die Zu- und Abfuhr von Schmier- und Kühlmittel zu und von den Lamellenscheiben ermöglichen.

Bei diesem bekannten Trommelbauteil mit Verzahnung zur Aufnahme von Lamellenscheiben handelt es sich um ein Trommelbauteil, das sowohl mit einer Innen- als auch mit einer Außenverzahnung versehen ist und dementsprechend sowohl am Innenumfang als auch am Außenumfang mit entsprechenden Lamellenscheiben einer Lamellenkupplung zusammenwirken kann.

Die Aufgabe der vorliegenden Erfindung ist es, ein Trommelbauteil mit Verzahnung zur Aufnahme von Lamellenscheiben, der eingangs erwähnten Art derart zu verbessern, daß auch bei einem Trommelbauteil ohne Außenverzahnung an der mit den Lamellenscheiben zusammenwirkenden Innenverzahnung eine optimale Möglichkeit zur Zu- und Abfuhr von Schmier- und Kühlmittel zu und von den Lamellenscheiben sichergestellt werden kann. Bei dem Trommelbauteil gemäß der Erfindung ist der Außenumfang als Zylinder ausgebildet, der in bekannter Weise mit einem dieses Trommelbauteil umschlingenden Bremsband zusammenwirkt.

Gemäß der Erfindung wird die Aufgabe gelöst, indem ein Trommelbauteil gemäß dem Oberbegriff des Patentanspruches 1 die im Kennzeichenteil des Patentanspruches 1 aufgezeigten Merkmale aufweist.

In Anspruch 2 ist eine zweckmäßige Ausführungsform des Trommelbauteiles näher erläutert.

Dadurch, daß der Teil der Verzahnung, an dem die längslaufenden Ausnehmungen ausgebildet sind, der Fuß bzw. der Zahnlückengrund ist, wird sichergestellt, daß sich das Schmier- und Kühlmittel, das sich durch die Zentrifugalkraft an den radial äußeren Stellen ansammelt, einwandfrei abgeführt werden kann.

Dadurch, daß die am Endbereich der Verzahnung in bekannter Weise vorgesehene Ringnut für einen Sicherungsring soweit eingearbeitet ist, daß der Nutengrund-Durchmesser die V-förmigen Ausnehmungen am Zahnlückengrund anschneidet, wird die Ausbildung eines Grats bei der Bearbeitung der Ringnut wesentlich verringert, wodurch die Operationen zur Beseitigung der Bearbeitungsgrate vereinfacht werden können.

Die Erfindung wird anhand eines in den Zeichnungen gezeigten Ausführungsbeispieles erläutert. Es zeigt:
- Fig. 1: einen vertikalen Schnitt durch ein Trommelbauteil gemäß der Erfindung mit zur Erläuterung eingezeichneten Lamellenscheiben und den die Lamellen beaufschlagenden Ringkolben;
- Fig. 2: eine vergrößerte Ansicht in Richtung des Pfeiles II in Fig. 1 und
- Fig. 3: eine vergrößerte Ansicht des Bereiches im Kreis III in Fig. 1.

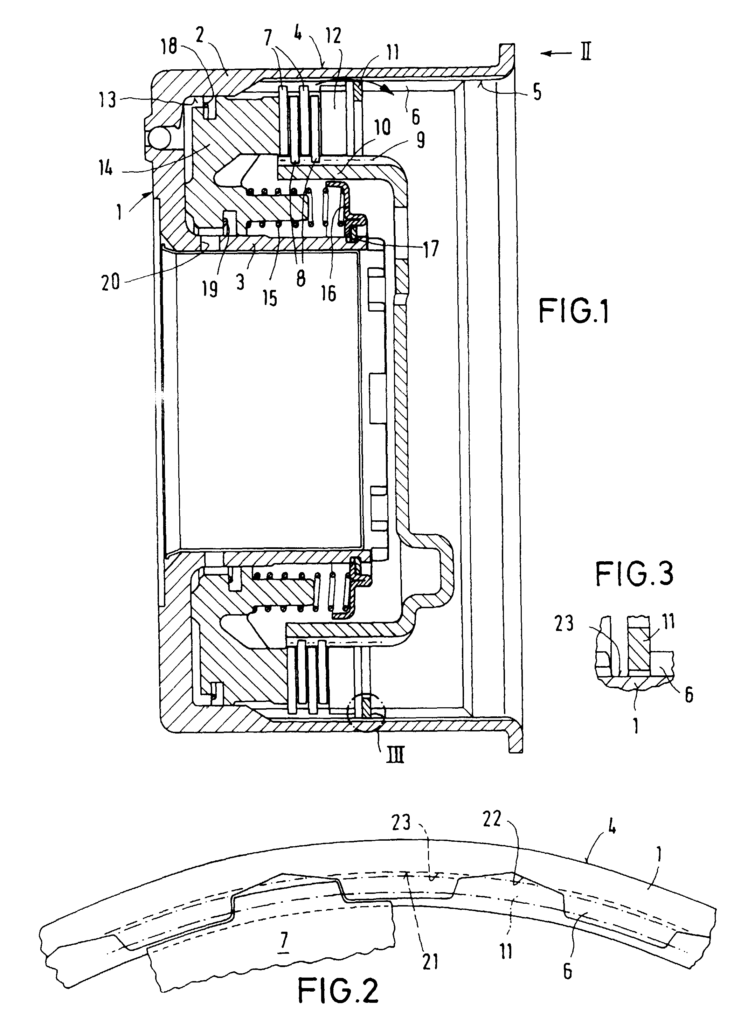

In Fig. 1 ist ein Trommelbauteil 1 mit einem zylindrischen Außenteil 2 und einem zylindrischen Innenteil 3 als einstückiges, kaltverformtes Stahlblechbauteil ausgebildet.

Das Außenteil 2 mit seiner äußeren zylindrischen Oberfläche 4 kann mit einem nicht gezeigten Bremsband eines automatischen Getriebes zusammenwirken. Der Innenumfang 5 des Außenteiles 2 ist mit einer Verzahnung 6 versehen, die zur Aufnahme einer Lamellenscheibenanordnung einer Lamellenkupplung eines automatischen Getriebes vorgesehen ist. Die Lamellenscheibenanordnung besteht aus einer Anzahl von äußeren Lamellenscheiben 7, die über entsprechende Laschen drehfest in der Verzahnung 6 aufgenommen sind und aus inneren Lamellenscheiben 8, die über entsprechende Laschen drehfest mit der Verzahnung 9 eines weiteren Trommelbauteiles 10 drehfest verbunden sind.

Die Lamellenscheibenanordnungen 7 und 8 sind zwischen einer an der Verzahnung 6 über einen Sicherungsring 11 festgelegten Endscheibe 12 und einem in dem durch den inneren Endabschnitt des Trommelbauteiles 1 gebildeten Ringzylinder 13 angeordneten Ringkolben 14 durch Anlegen eines hydraulischen Druckes beaufschlagbar.

Der Ringkolben 14 wird hierbei über eine Rückstellfeder 15, deren Federteller 16 über einen Sicherungsring 17 am Innenteil 3 des Trommelbauteiles 1 abgestützt ist, in seine Löselage zurückgeführt.

Der Ringkolben 14 ist in üblicher Weise mit Ringabdichtungen 18 und 19 und der Ringzylinder 13 ist mit einer Druckmittelzuführung 20 versehen.

Der bisher beschriebene Aufbau eines Trommelbauteiles mit Verzahnung zur Aufnahme von Lamellenscheiben einer Lamellenkupplung eines automatischen Getriebes ist im wesentlichen allgemein bekannt.

Der Lamellenscheibenanordnung 7 und 8 muß zur Erzielung einer ausreichenden Schmierung und Kühlung Schmier- bzw. Kühlmittel zugeführt werden, was durch die im automatischen Getriebe vorhandene Schmiermittelfüllung bewerktstelligt wird. Durch die auf das Schmiermittel einwirkende Fliehkraft sammelt sich das zugeführte Schmiermittel im Bereich der Verzahnung 6 und kann für den Fall, daß die Endscheibe 12 und der Sicherungsring 11 keinen ausreichenden Durchfluß gewährleistet, zu einem Rückstau führen, der ein gleichmäßiges Anlegen der Lamellenscheibenanordnung 7 und 8 beeinträchtigt.

Gemäß der Erfindung wird daher die Verzahnung 6 in einer besonderen Weise ausgeführt, die in Zusammenhang mit Fig. 2 näher erläutert wird.

Fig. 2 zeigt eine vergrößerte Ansicht in Richtung des Pfeiles II in Fig. 1, wobei der Sicherungsring 11 in Strich-Punkt-Linien angedeutet ist und die den Sicherungsring 11 aufnehmende Ringnut 21 in gestrichelten Linien eingezeichnet ist.

Die als Innenverzahnung ausgebildete Verzahnung 6 ist in an sich bekannter Weise als eine Evolventen-Verzahnung ausgebildet, wobei jedoch gemäß der Erfindung der Fuß bzw. der Zahnlückengrund 22 abweichend von der üblichen Form mit einer längslaufenden V-förmigen Ausnehmung 22 versehen ist. Der Nutengrund 23 der Ringnut 21 für den Sicherungsring 11 ist hierbei so tief gelegt, daß er die V-förmigen Ausnehmungen 22 anschneidet.

Wie aus der in der linken Hälfte der Fig. 2 ausschnittsweise eingezeichneten Lamellenscheibe 7 ersichtlich ist, verbleibt zwischen den in die Verzahnungslücken eingreifenden Laschen der Lamellenscheiben 7 ein etwa dreieckförmiger Querschnitt, der für die Abfuhr des Kühl- und Schmiermittels sorgt.

Durch die Ausführung der Zahnlücke der Verzahnung mit einer längslaufenden V-förmigen Ausnehmung 22 wird nicht nur die Abfuhr von Kühl- und Schmiermittel sichergestellt, sondern darüber hinaus wird auch bei der Fertigung des Trommelbauteiles, das in einem an sich bekannten Druckwalzverfahren erfolgt, eine bessere Ausformung der Verzahnung 6 erreicht, da durch die V-förmige Form des Fußgrundes bzw. des Zahnlückengrundes 22 ein besseres Fließen des Materials in Richtung auf die erhabenen Verzahnungsbereiche erreicht wird.

Dadurch, daß der Nutengrund-Durchmesser der Ringnut für den Sicherungsring den V-förmigen Bereich der Ausnehmungen anschneidet, wird das Entstehen eines Grates vermieden, wodurch nachfolgende Entgratungsoperationen vereinfacht werden können.

## Patentansprüche

1. Trommelbauteil (1) mit Verzahnung (6) zur Aufnahme von Lamellenscheiben (7), das als einstückiges, kaltverformtes Stahlblechbauteil ausgebildet ist und an zumindest einer Verzahnung (6), einer Innen- und/oder Außenverzahnung mit während der Herstellung ausgebildeten längslaufenden Ausnehmungen (22) mit V-förmigen Querschnitt an einem Teil der Verzahnung zur Abfuhr von Schmier- und Kühlmittel versehen ist,
**dadurch gekennzeichnet**, daß
- der Teil der Verzahnung (6) an dem die längslaufenden V-förmigen Ausnehmungen (22) ausgebildet sind, der Fuß bzw. der Zahnlückengrund ist.

2. Trommelbauteil nach Anspruch 1,
**dadurch gekennzeichnet**, daß
- in an sich bekannter Weise eine Ringnut (21) für einen Sicherungsring (11) zum Festlegen einer Endscheibe (12) am Innenumfang der Verzahnung (6) eingearbeitet ist, wobei der Nutengrund-Durchmesser (23) die V-förmigen Ausnehmungen (22) anschneidet.

## Claims

1. A drum member (1) having a tooth system (6) for receiving multiple discs (7), which is formed as a one-piece, cold worked sheet steel member and which, on at least one tooth system (6), an internal and/or an external tooth system, is provided on part of the tooth system with longitudinally extending recesses (22) of V-shaped cross section, formed during manufacture, for the removal of lubricating and cooling medium,
characterised in that
- the part of the tooth system (6) on which the longitudinally extending V-shaped recesses (22) are formed is the foot or the base of the tooth gap.

2. A drum member according to claim 1,
characterised in that
- an annular groove (21) for a securing ring (11) for securing an end disc (12) is machined into the inner circumference of the tooth system (6) in known manner but with the diameter (23) of the base of the groove intersecting the V-shaped recesses (22).

## Revendications

1. Élément en forme de tambour (1) comportant une denture (6) destinée à recevoir des disques d'embrayage (7), qui est réalisé en tant qu'élément en tôle d'acier d'un seul tenant formé à froid et qui est muni sur au moins une partie de la denture (6) d'une denture intérieure et/ou extérieure comportant des évidements (22) longitudinaux de section en V qui sont réalisés lors de la fabrication et qui servent à évacuer de l'agent lubrifiant et refroidissant, caractérisé en ce que la partie de la denture (6) dans laquelle sont réalisés les évidements en forme de V (22) est la base des dents ou le fond de l'entredent.

2. Élément en forme de tambour selon la revendication 1, caractérisé en ce qu'une rainure annulaire (21) pour un circlip (11) destiné à immobiliser un disque terminal (12) est ménagée d'une façon connue en soi dans le pourtour intérieur de la denture (6), le diamètre du fond de la rainure (23) entamant les évidements en forme de V (22).
